# EUROPEAN PATENT APPLICATION

(11) **EP 3 006 774 A1**
(43) Date of publication of application: **13.04.2016**
(21) Application number: 15180191.7
(22) Date of filing: 07.08.2015
(51) Int. Cl.: F16F 15/129, F16D 3/14, F16D 7/02, F16F 15/139

(54) **DAMPER APPARATUS WITH TORQUE LIMITER**

(30) Priority: 10.09.2014 JP 2014184457
(71) Applicant: AISIN SEIKI KABUSHIKI KAISHA, Kariya-shi, Aichi 448-8650 (JP)
(72) Inventor: Miyamachi, Yoshihiro, Kariya-shi, Aichi 448-8650 (JP); Ukei, Tsuneo, Kariya-shi, Aichi 448-8650 (JP); Nishio, Yusaku, Kariya-shi, Aichi 448-8650 (JP)
(74) Representative: Kramer Barske Schmidtchen Patentanwälte PartG mbB

(57) **Abstract**

A damper apparatus (100, 100A, 100B) includes a first rotation member (1), a second rotation member (2), a third rotation member (3), an elastic member (6) elastically expanding and contracting in association with a relative rotation between the first rotation member and the third rotation member, and a limiter portion including a friction member (102) sandwiched between the third rotation member and the second rotation member, the friction member being configured to slide relative to at least one of the third rotation member and the second rotation member to cause the third rotation member and the second rotation member to rotate relative to each other in a case where a value of a torque difference between the third rotation member and the second rotation member is equal to or greater than a predetermined value. The third rotation member includes a diameter smaller than a diameter of the second rotation member.

## Description

### TECHNICAL FIELD

This disclosure generally relates to a damper apparatus.

### BACKGROUND DISCUSSION

A known damper apparatus, which is disclosed in JP2012-193773A, for example, includes a first rotation member rotatable around a rotation center, a second rotation member rotatable around the rotation center, and a third rotation member disposed between the first rotation member and the second rotation member to be rotatable around the rotation center. The aforementioned damper apparatus further includes an elastic member that elastically expands and contracts in association with a relative rotation between the first rotation member and the third rotation member to thereby absorb a torque fluctuation and a limiter portion that causes the third rotation member and the second rotation member to rotate relative to each other in a case where a torque difference between the third rotation member and the second rotation member reaches or exceeds a predetermined value.

In the aforementioned damper apparatus disclosed in JP2012-193773A, for example, in a case where a torque of the third rotation member becomes greater than a torque of the second rotation member and then the limiter portion is operated to rotate the third rotation member and the second rotation member relative to each other, some torque may be input to the first rotation member from the third rotation member.

A need thus exists for a damper apparatus which is configured so that a torque input to a low torque side may be reduced in a case where a limiter portion is operated.

### SUMMARY

According to an aspect of this disclosure, a damper apparatus includes a first rotation member rotatable around a rotation center, a second rotation member rotatable around the rotation center, a third rotation member arranged between the first rotation member and the second rotation member and being rotatable around the rotation center, an elastic member elastically expanding and contracting in association with a relative rotation between the first rotation member and the third rotation member around the rotation center, and a limiter portion including a friction member sandwiched between the third rotation member and the second rotation member, the friction member being configured to slide relative to at least one of the third rotation member and the second rotation member to cause the third rotation member and the second rotation member to rotate relative to each other around the rotation center in a case where a value of a torque difference between the third rotation member and the second rotation member is equal to or greater than a predetermined value. The third rotation member includes a diameter smaller than a diameter of the second rotation member.

Accordingly, for example, a size in a radial direction of the third rotation member and an inertia torque thereof may be reduced. A torque input to the first rotation member (i.e., low torque side) from the third rotation member may be therefore reduced.

At least a portion of the friction member and the elastic member overlap in a direction orthogonal to the rotation center.

Accordingly, for example, as compared to a case where the friction member and the elastic member are inhibited from overlapping in the direction orthogonal to the rotation center and are arranged to be displaced from each other in the axial direction, the size and inertial torque of the third rotation member may be reduced. Accordingly, the torque input to the first rotation member from the third rotation member may be therefore reduced.

The third rotation member includes a first wall portion positioned at a radially outer side than the elastic member, a second wall portion protruding from the first wall portion towards the radially outer side and towards an opposite side from the first rotation member in an axial direction of the rotation center, and a third wall portion protruding from the second wall portion towards the radially outer side and overlapping the friction member in the axial direction.

Provided the third rotation member is formed in a flat plate form, for example, a space for arranging the friction member and the second rotation member between the third rotation member and the first rotation member is unlikely to be secured. As a result, the friction member, the second rotation member and a portion of the third rotation member overlapping the friction member and the second rotation member in the axial direction may need to be arranged at a further radially outer side. Nevertheless, in the present disclosure, the friction member and the second rotation member are arranged between the third wall portion and the first rotation member. Thus, the friction member, the second rotation member and the third wall portion of the third rotation member overlapping the friction member and the second rotation member in the axial direction may be arranged at a further radially inner side as compared to a case where the third rotation member is formed in a flat plate form. The size in the radial direction of the third rotation member and the inertia torque thereof may be further reduced.

The second rotation member includes a hub portion covering a periphery of the rotation center and a first plate portion positioned at the radially outer side of the rotation center than the third rotation member, the hub portion and the first plate portion being integrally formed with each other.

Accordingly, as compared to a case where the hub portion and the first plate portion are formed by separate members from each other, for example, a labor hour and a cost related to a manufacturing of the damper apparatus may be reduced.

The third rotation member includes a pair of second plate portions positioned away from each other in an axial direction of the rotation center and overlapping the elastic member in a circumferential direction of the rotation center, and a third plate portion positioned overlapping the friction member in the axial direction, at least one of the pair of second plate portions and the third plate portion being integrally formed with each other.

Accordingly, as compared to a case where the pair of second plate portions and the third plate portion are formed by separate members from each other, for example, a labor hour and a cost related to a manufacturing of the damper apparatus may be reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a front view of a damper apparatus when viewed in an axial direction according to a first embodiment disclosed here;
Fig. 2 is a cross-sectional view of the damper apparatus according to the first embodiment;
Fig. 3 is a partially enlarged view of the damper apparatus illustrated in Fig. 2;
Fig. 4 is an explanatory view of a state where a first rotation member and a protruding portion of a third rotation member of the damper apparatus are away from each other according to the first embodiment;
Fig. 5 is an explanatory view of a state where the first rotation member and the protruding portion of the third rotation member of the damper apparatus are in contact with each other;
Fig. 6 is a cross-sectional view of a portion of a damper apparatus according to a second embodiment disclosed here; and
Fig. 7 is a cross-sectional view of a portion of a damper apparatus according to a third embodiment disclosed here.

### DETAILED DESCRIPTION

Embodiments will be explained with reference to the attached drawings. The plural embodiments include substantially similar components to one another. Thus, the substantially similar components bear the same reference numerals and duplication of explanation is omitted. In addition, constructions, technical features of each embodiment explained below and effects and the like resulting from such constructions are examples.

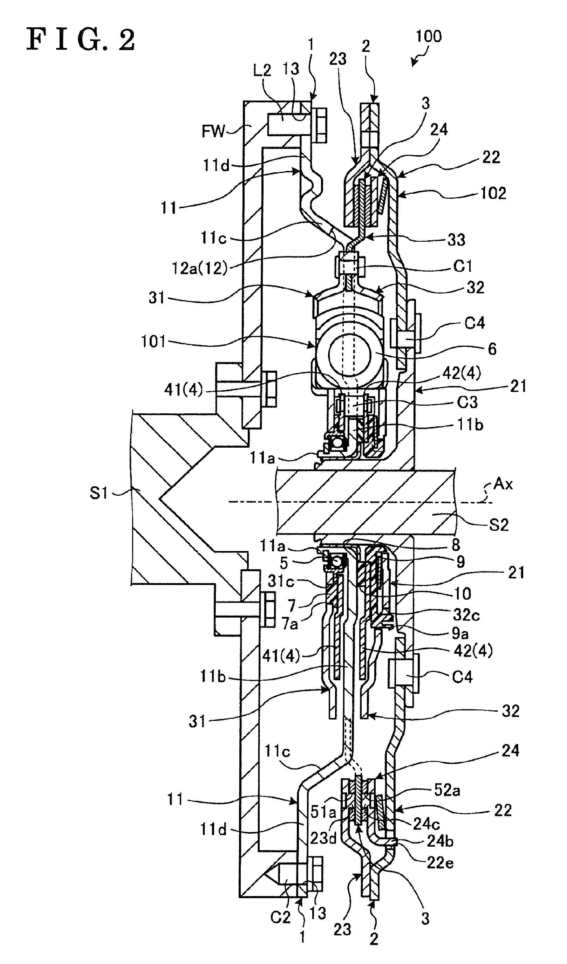

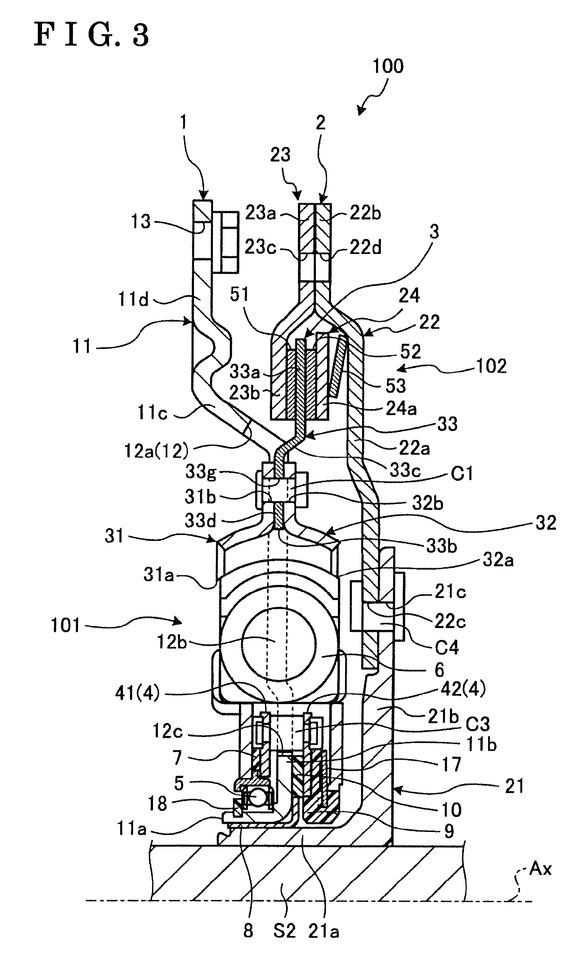

A first embodiment is explained below. As illustrated in Fig. 2, a damper apparatus 100 is positioned, for example, between an output shaft S1 of an engine serving as an input side and an input shaft S2 of a transmission serving as an output side. The damper apparatus 100 is configured to absorb a fluctuation of torque or rotation, for example, serving as a driving force between the input side and the output side. The damper apparatus 100 may be referred to as a torque fluctuation absorber. The damper apparatus 100 is not necessarily provided between the engine and the transmission and may be provided between two rotational elements, for example, between the engine and a motor generator. Further, the damper apparatus 100 may be provided at various vehicles or machineries including rotation elements, for example. In the following, unless otherwise specified, an axial direction, a radial direction and a circumferential direction are defined on a basis of a rotation center Ax. The rotation center Ax may be also referred to as a rotation axis or an axis center, for example. In the embodiment, for convenience, a side where the engine is provided in the axial direction i.e., a left side in each Fig. 2 and 3 is referred to as a first side in the axial direction and a side where the transmission is provided, i.e., a right side in each Fig. 2 and 3 is referred to as a second side in the axial direction.

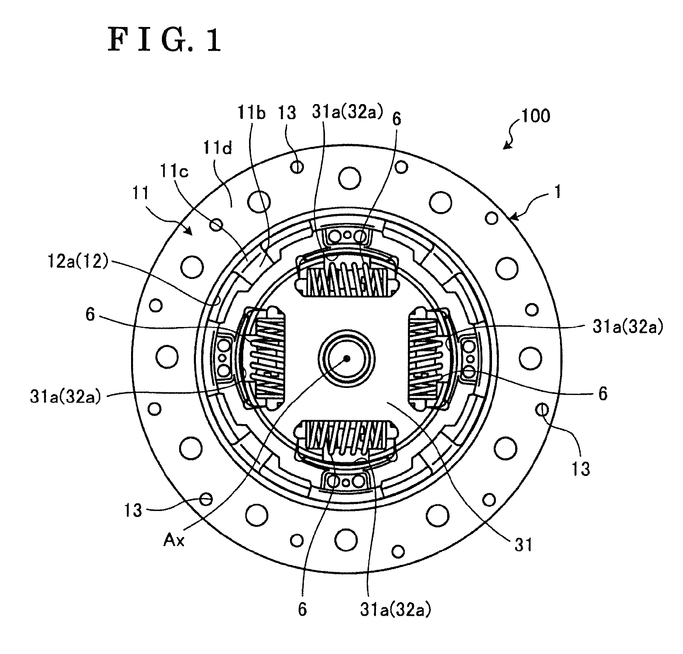

The damper apparatus 100 rotates about the rotation center Ax. As illustrated in Figs. 1 to 3, the damper apparatus 100 as a whole is configured in a flat disc form which is thin in the axial direction.

The damper apparatus 100 includes a damper portion 101 and a limiter portion 102. The damper portion 101 is positioned at a radially inner side in the damper apparatus 100. The limiter portion 102 is positioned at a radially outer side relative to the damper portion 101 in the damper apparatus 100. The damper portion 101 is configured in a flat disc form which is thin in the axial direction. The limiter portion 102 is configured in an annular form. As illustrated in Fig. 2, the damper portion 101 includes a first rotation member 1, a third rotation member 3 and elastic members 6 disposed between the first rotation member 1 and the third rotation member 3. The damper portion 101 absorbs a torque fluctuation by elastic expansion and contraction of the elastic members 6 in association with a relative rotation between the first rotation member 1 and the third rotation member 3 around the rotation center Ax. As illustrated in Fig. 3, the limiter portion 102 includes a second rotation member 2, the third rotation member 3, and friction members 51 and 52 both of which are disposed between the second rotation member 2 and the third rotation member 3. The limiter portion 102 interferes or blocks a transmission of excessive torque between the damper portion 101 and the output side by a sliding of the friction members 51 and 52 relative to at least one of the second rotation member 2 and the third rotation member 3 in association with a relative rotation between the second rotation member 2 and the third rotation member 3 around the rotation center Ax.

As illustrated in Fig. 2, each of the first rotation member 1, the second rotation member 2 and the third rotation member 3 is configured in an annular and plate form expanding in the radial direction while intersecting with the rotation center Ax (rotation axis). The first rotation member 1, the second rotation member 2, and the third rotation member 3 are provided to be rotatable around the rotation center Ax. The first rotation member 1 is connected to the output shaft S1 of the engine serving as the input side via a flywheel FW. The third rotation member 3 is connected to the input shaft S2 of the transmission serving as the output side via the second rotation member 2. That is, the third rotation member 3 is disposed between the first rotation member 1 and the second rotation member 2 at a power transmission passage between the input side and the output side. The third rotation member 3 may be also referred to as an intermediate member.

The third rotation member 3 constitutes a portion of the damper portion 101 and a portion of the limiter portion 102. As illustrated in Fig. 2, the third rotation member 3 includes plural side plates 31, 32 and lining plate 33. In the present embodiment, for example, the two side plates 31 and 32 are positioned at a radially inner side in the third rotation member 3 and the lining plate 33 is positioned at the radially outer side relative to the side plates 31 and 32.

The side plate 31 is positioned at the first side in the axial direction relative to the side plate 32. That is, the side plates 31 and 32 are arranged away from each other in the axial direction. Each of the side plates 31 and 32 is configured in an annular and plate form expanding in the radial direction. As illustrated in Fig. 1, plural opening portions 31a are formed at the side plate 31 so as to be spaced away from one another in the circumferential direction and plural opening portions 32a are formed at the side plate 32 so as to be spaced away from one another in the circumferential direction. As illustrated in Fig. 3, the opening portion 31a and the opening portion 32a overlap in the axial direction to form a penetration bore, for example. The elastic member 6 is disposed between a first circumferential edge portion and a second circumferential edge portion of the opening portion 31a and between a first circumferential edge portion and a second circumferential edge portion of the opening portion 32a in a state where the opening portion 31a and the opening portion 32a overlap in the axial direction. The side plates 31 and 32 are fixed and connected to each other via a connecting member C1 such as a rivet, for example, as illustrated in Fig. 3.

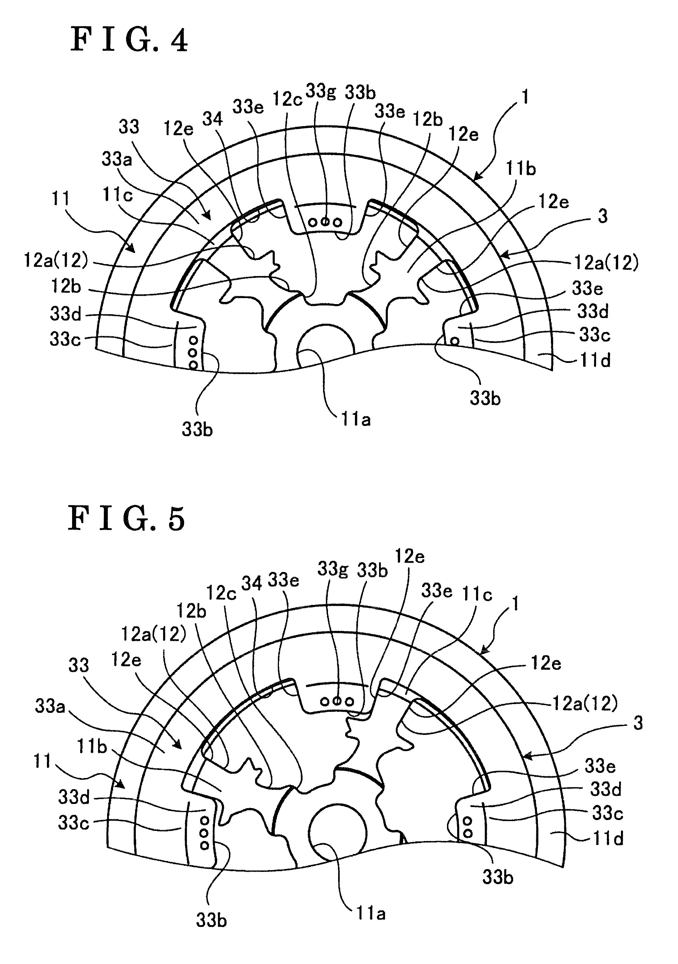

As illustrated in Fig. 4, the lining plate 33 includes a third wall portion 33a in an annular form and plural protruding portions 33b protruding to the radially inner side from the third wall portion 33a, i.e., towards the rotation center Ax. In the present embodiment, for example, the four protruding portions 33b are disposed at even intervals along the circumferential direction of the third wall portion 33a. An opening portion 34 is provided between the adjacent two protruding portions 33b, 33b in the circumferential direction of the lining plate 33. The opening portion 34 may be also referred to as a cut portion, a recess portion or a groove portion, for example. An opening portion 33g is formed at the protruding portion 33b as illustrated in Fig. 3 so that the connecting member C1 penetrates through the opening portion 33g in addition to opening portions 31b and 32b formed at the side plates 31 and 32 respectively. That is, the side plates 31, 32 and the lining plate 33 are integrally connected to one another via the connecting member C1. The lining plate 33 therefore integrally rotates with the side plates 31 and 32.

As illustrated in Fig. 3, the protruding portion 33b includes a first wall portion 33d and a second wall portion 33c. The first wall portion 33d is a portion at the radially inner side in the protruding portion 33b and is configured in a plate form expanding in the radial direction. The first wall portion 33d is disposed between the side plates 31 and 32 at the radially outer side of the elastic member 6. The second wall portion 33c is a portion at the radially outer side of the protruding portion 33b. The second wall portion 33c connects between the first wall portion 33d and the third wall portion 33a in an annular form. The second wall portion 33c protrudes obliquely from a radially outer end portion of the first wall portion 33d towards the second side in the axial direction, i.e., to the right side in Fig. 3, and towards the radially outer side. In the present embodiment, the first wall portion 33d and the third wall portion 33a are connected via the second wall portion 33c. The first wall portion 33d and the third wall portion 33a are arranged so as not to overlap in the radial direction and so as to be displaced from each other in the axial direction. The third rotation member 3, specifically, the side plates 31, 32 and the lining plate 33, may be formed of a metallic material, for example. The lining plate 33 may be formed of a metallic material such as stainless steel, for example, different from the material of the side plates 31 and 32.

The first rotation member 1 constitutes a portion of the damper portion 101 and includes a drive plate 11. As illustrated in Fig. 2, the drive plate 11 includes cylinder portions 11 a and 11c. The drive plate 11 also includes a first projecting portion 11 b and a second projecting portion 11 d each of which serves as a wall portion. The cylinder portion 11a is a portion at the radially inner side in the drive plate 11 and is configured in a cylinder form. As also illustrated in Fig. 3, the cylinder portion 11a is positioned away from the side plate 31 at the radially inner side thereof so as to surround or cover a cylindrical portion 21 a of the second rotation member 2. The first projecting portion 11 b protrudes from the second side in the axial direction of the cylinder portion 11 a, i.e., a right end portion of the cylinder portion 11a in Figs. 2 and 3, towards the radially outer side to be configured in a plate form expanding in the radial direction. The first projecting portion 11 b is positioned between the side plates 31 and 32. The cylinder portion 11c obliquely protrudes from a radially outer end portion of the first projecting portion 11 b towards the first side in the axial direction, i.e., to the left side in Figs. 2 and 3, and towards the radially outer side to constitute a wall portion in a conical surface form. The second projecting portion 11 d protrudes from an axially one end portion of the cylinder portion 11c towards the radially outer side to be configured in an annular and plate form expanding in the radial direction. The second projecting portion 11 d is positioned away from the third wall portion 33a of the lining plate 33 at the first side in the axial direction.

As illustrated in Fig. 4, plural openings 12 are formed at the first projecting portion 11 b of the drive plate 11 so as to be spaced away from one another in the circumferential direction. Each of the openings 12 is configured as a penetration bore penetrating through the first projecting portion 11 b along a direction orthogonal to a paper surface on which Fig. 4 is drawn. The opening 12 includes openings 12a, 12b and 12c. The opening 12a is positioned at the radially outer side in the opening 12. The opening 12b is positioned at the radially inner side of the opening 12a. The opening 12c is positioned at the radially inner side of the opening 12b. As also illustrated in Fig. 3, the opening 12a is formed over at least a portion of the first projecting portion 11 b and a portion of the cylinder portion 11c. The protruding portion 33b of the lining plate 33 is inserted to be positioned within the opening 12a. The elastic member 6 is disposed within the opening 12b to extend from a first circumferential end to a second circumferential end thereof as illustrated in Figs. 1 to 3. The opening 12b overlaps the opening portions 31a and 32a of the side plates 31 and 32 in the axial direction. The opening 12c is configured as an elongated bore where a connecting member C3 as illustrated in Fig. 3 is caught or engaged in the circumferential direction.

As illustrated in Fig. 1, plural openings 13 are formed to be spaced away from one another in the circumferential direction at the second projecting portion 11 d of the drive plate 11. As illustrated in Fig. 2, the drive plate 11 is connected to the flywheel FW via a connecting member C2 such as a bolt and a screw, for example, which is inserted to be positioned within the opening 13. The flywheel FW may be referred to as a mass body or an inertia body, for example. In the present embodiment, the drive plate 11 as the first rotation member 1 is connected to the output shaft S1 of the engine via the flywheel FW to integrally rotate with the output shaft S1. The first rotation member 1, i.e., the drive plate 11, may be formed of a metallic material, for example.

The elastic members 6 constitute a portion of the damper portion 101. Each of the elastic members 6 illustrated in Figs. 1 to 3, which is formed of a metallic material, for example, serves as a coil spring extending substantially in the circumferential direction. The elastic member 6 is housed within the opening 12b and the opening portions 31a and 32a which overlap one another in the axial direction. In a case where the first rotation member 1 and the third rotation member 3 rotate relative to each other in a direction where the first circumferential end portion of the opening 12b and the second circumferential edge portions of the opening portions 31a and 32a approach each other, the elastic member 6 elastically contracts while being sandwiched by the aforementioned end portion and the edge portions. On the other hand, in a case where the first rotation member 1 and the third rotation member 3 rotate relative to each other in a direction where the first circumferential end portion of the opening 12b and the second circumferential edge portions of the opening portions 31 a and 32a separate from each other in a state where the elastic member 6 elastically contracts within the opening 12b and the opening portions 31a, 32a, the elastic member 6 elastically expands. That is, the elastic member 6 is sandwiched between the first rotation member 1 and the third rotation member 3 to elastically expand and contract substantially along the circumferential direction in association with the relative rotation between the first rotation member 1 and the third rotation member 3 around the rotation center Ax. The elastic member 6 stores a torque as a compressive force by elastically contracting and releases the compressive force as the torque by elastically expanding. The elastic member 6 is positioned between the first rotation member 1 and the third rotation member 3 to be sandwiched therebetween substantially along the circumferential direction to elastically expand and contract substantially along the circumferential direction. The damper portion 101 may absorb the torque fluctuation by the expansion and contraction of the elastic members 6.

As illustrated in Figs. 4 and 5, each of the protruding portions 33b of the lining plate 33 is configured to be contactable with an inner end surface of the opening 12a of the drive plate 11. Specifically, the inner end surface, i.e., a circumferential end surface of the opening 12a, includes a facing region 12e that circumferentially faces an end portion 33e of the protruding portion 33b in the circumferential direction. The facing region 12e and the end portion 33e of the protruding portion 33b are configured to be contactable with each other. In addition, the end portion 33e of the protruding portion 33b and the facing region 12e of the opening 12a are configured to make contact with each other in a case where the first rotation member 1 and the third rotation member 3 rotate relative to each other around the rotation center Ax. That is, the end portion 33e of the protruding portion 33b and the facing region 12e of the opening 12 restrict a range of the relative rotation between the first rotation member 1 and the third rotation member 3 around the rotation center Ax. Thus, in the present embodiment, for example, a compression amount of the elastic member 6, for example, may be restricted. Because the compression amount of the elastic member 6 is restrained from exceeding a specified value, for example, a reduction of durability of the elastic member 6 may be restrained. Accordingly, in the present embodiment, the openings 12a of the drive plate 11 and the protruding portions 33b of the lining plate 33 function as a stopper portion that restricts the range of the relative rotation between the first rotation member 1 and the third rotation member 3 around the rotation center Ax.

As illustrated in Figs. 2 and 3, a bearing member 8 in a cylindrical form is provided at the radially inner side of the drive plate 11. In the present embodiment, the drive plate 11 is supported and positioned in the radial direction relative to a hub member 21 of the second rotation member 2 via the bearing member 8. The bearing member 8 supports the drive plate 11, i.e., the first rotation member 1, to be rotatable at a predetermined posture or position. The bearing member 8 is a slide bearing made of metal or formed by a bush, for example.

As illustrated in a lower portion of Fig. 3, a fourth rotation member 4 is provided between the side plates 31, 32 and the drive plate 11. The fourth rotation member 4 includes plural control plates 41 and 42. The control plate 41 is positioned between the side plate 31 and the first projecting portion 11 b and the control plate 42 is positioned between the side plate 32 and the first projecting portion 11 b. That is, the control plates 41 and 42 are disposed away from each other in the axial direction. The control plates 41 and 42, each of which is configured in an annular and plate form expanding in the radial direction, are connected to each other via the connecting member C3 such as a rivet, for example, penetrating through the opening 12c in the axial direction. In the present embodiment, the connecting member C3 makes contact with circumferential end surfaces of the opening 12c to thereby restrict a range of the relative rotation between the drive plate 11 and the control plates 41, 42 around the rotation center Ax.

As illustrated in the lower portion of Fig. 3, a sliding member 7 is provided between the side plate 31 and the control plate 41 and a sliding member 9 is provided between the side plate 32 and the control plate 42. As illustrated in a lower portion of Fig. 2 lower than the rotation center Ax, the sliding members 7 and 9 include protruding portions 7a and 9a, respectively, which are caught or engaged in the circumferential direction with opening portions 31 c and 32c formed at the side plates 31 and 32. Thus, the sliding member 7 and 9 integrally rotate with the side plates 31 and 32, i.e., the third rotation member 3, around the rotation center Ax. Each of the sliding members 7 and 9 generates a sliding torque in a case where the drive plate 11 and the side plates 31, 32 rotate relative to each other around the rotation center Ax to thereby reduce vibration or noise, for example. In addition, a sliding member 10 is provided between the first projecting portion 11b and the control plate 42. The sliding member 10 generates a sliding torque in a case where the drive plate 11 and the control plate 42 rotate relative to each other around the rotation center Ax to thereby reduce vibration or noise, for example. Each of the sliding members 7, 9 and 10 may be formed of a synthetic resin material, for example.

As illustrated in the lower portion of Fig. 3, an elastic member 17 is provided between the side plate 32 and the sliding member 9. The elastic member 17 generates an elastic force to the side plate 32 and the sliding member 9 in a direction where the side plate 32 and the sliding member 9 separate from each other in the axial direction. Specifically, the elastic member 17 presses the sliding member 9 against the control plate 42 and further presses the control plate 41 against the sliding member 7 via the control plate 42. Accordingly, the elastic member 17 may apply a sliding resistance to each of the sliding members 7 and 9. The elastic member 17 is an annular cone spring formed of a metallic material, for example.

As illustrated in the lower portion of Fig. 3, a bearing 5 is provided at the radially inner side of the side plate 31. In the present embodiment, the side plate 31 is rotatably supported at the drive plate 11 via the bearing 5. The bearing 5 is configured in an annular form and is fitted to an outer peripheral side of the cylinder portion 11 a by being inserted from the first side in the axial direction, i.e., from the left side in Fig. 3. A fixture 18 such as a C-ring, for example, is provided at the first side in the axial direction of the bearing 5 for restraining the bearing 5 from dislocating from the cylinder portion 11 a. The bearing 5 is a rolling bearing such as a ball bearing, for example.

The second rotation member 2 constitutes a portion of the limiter portion 102. As illustrated in Fig. 3, the second rotation member 2 includes the hub member 21, a cover 22, a support plate 23 and a pressure plate 24. The hub member 21 is positioned at the radially inner side in the second rotation member 2. The cover 22 is positioned at the radially outer side of the hub member 21. The support plate 23 is positioned at the first side in the axial direction of the cover 22, i.e., at the left side in Fig. 3 of the cover 22. The pressure plate 24 is positioned between the cover 22 and the support plate 23. In the present embodiment, the limiter portion 102 includes, from the second side in the axial direction, i.e., from the right side in Fig. 3, towards the first side in the axial direction, the cover 22, an elastic member 53, the pressure plate 24, the friction member 52, the lining plate 33, the friction member 51 and the support plate 23. The cover 22, the elastic member 53, the pressure plate 24, the friction member 52, the lining plate 33, the friction member 51 and the support plate 23 are arranged to overlap one another in a state to be closely contact with one another in the axial direction. The second rotation member 2 and the elastic member 53 sandwich therebetween the friction member 52, the lining plate 33 and the friction member 51 in the axial direction in a state wrapping around from the radially outer side so as to elastically press the friction member 52, the lining plate 33 and the friction member 51.

As illustrated in the lower portion of Fig. 3, the hub member 21 includes the cylindrical portion 21 a in a cylindrical form and a first connection portion 21 b serving as a wall portion positioned at the radially outer side of the cylindrical portion 21 a. The cylindrical portion 21 a is provided to cover the input shaft S2 of the transmission. The cylindrical portion 21 a is connected to the input shaft S2 by press-fitting or spline connection, for example, so as to integrally rotate with the input shaft S2. The first connection portion 21 b protrudes radially outwardly from the second side in the axial direction of the cylindrical portion 21 a, i.e., from a right end portion in Fig. 3 of the cylindrical portion 21 a, to be configured in an annular and plate form expanding in the radial direction. The first connection portion 21 b is positioned away from the elastic member 6 at the second side in the axial direction.

As illustrated in a right upper portion of Fig. 3, the cover 22 includes a second connection portion 22a serving as a wall portion extending radially outwardly from the first connection portion 21 b and a third connection portion 22b serving as a wall portion protruding from a radially outer end portion of the second connection portion 22a towards the first side in the axial direction, i.e., towards the left side in Fig. 3, and towards the radially outer side. Each of the second connection portion 22a and the third connection portion 22b is configured in an annular and plate form expanding in the radial direction. The second connection portion 22a and the first connection portion 21b are connected to each other by a connecting member C4 such as a rivet, for example, penetrating through openings 22c and 21 c formed at the second connection portion 22a and the first connection portion 21 b respectively. Thus, the cover 22 integrally rotates with the hub member 21. As illustrated in Fig. 3, the third connection portion 22b is positioned at the radially outer side than the lining plate 33, i.e., the third rotation member 3.

As illustrated in an upper portion of Fig. 3, the support plate 23 includes a fourth connection portion 23a serving as a wall portion overlapping the third connection portion 22b in the axial direction and a fifth connection portion 23b serving as a wall portion protruding from a radially inner end portion of the fourth connection portion 23a towards the first side in the axial direction, i.e., towards the left side in Fig. 3, and radially inner side. Each of the fourth connection portion 23a and the fifth connection portion 23b is configured in an annular and plate form expanding in the radial direction. The fourth connection portion 23a and the third connection portion 22b are connected to each other by a connecting member such as a rivet, for example, penetrating through openings 23c and 22d formed at the fourth connection portion 23a and the third connection portion 222b respectively. Thus, the support plate 23 integrally rotates with the cover 22 and the hub member 21. As illustrated in Fig. 3, the fifth connection portion 23b is positioned between the second projecting portion 11 d of the drive plate 11 and the third wall portion 33a of the lining plate 33.

The pressure plate 24 as illustrated in the upper right portion of Fig. 3 constituting a portion of the limiter portion 102 includes a sixth connection portion 24a serving as a wall portion in an annular form and a protruding portion 24b illustrated in the lower portion of Fig. 2. The protruding portion 24b protrudes from a radially outer end portion of the sixth connection portion 24a towards the second side in the axial direction, i.e., towards the right side in Fig. 2. As illustrated in Fig. 3, the sixth connection portion 24a is positioned away from the cover 22 towards the first side in the axial direction i.e., the left side in Fig. 3. In addition, the plural protruding portions 24b are formed to be spaced away from one another in the circumferential direction of the sixth connection portion 24a. As illustrated in the lower portion of Fig. 2, the plural protruding portions 24b are inserted to be positioned within plural openings 22e formed at the cover 22 respectively. Edge portions of each of the protruding portions 24b and edge portions of each of the openings 22e are caught or engaged with each other in the circumferential direction. Thus, the pressure plate 24 integrally rotates with the cover 22, the support plate 23 and the hub member 21 around the rotation center Ax. The second rotation member 2, specifically, the hub member 21, the cover 22, the support plate 23 and the pressure plate 24, may be formed of a metallic material, for example.

As illustrated in the upper right portion of Fig. 3, in the limiter portion 102, the friction member 51 is positioned between the fifth connection portion 23b of the support plate 23 and the third wall portion 33a of the lining plate 33. The friction member 52 is positioned between the sixth connection portion 24a of the pressure plate 24 and the third wall portion 33a of the lining plate 33. Each of the friction members 51 and 52 is configured in an annular and plate form expanding in the radial direction. As illustrated in the lower portion of Fig. 2, plural openings 51 a are formed at the friction member 51 and plural openings 52a are formed at the friction member 52. A projection 23d formed at the support plate 23 is inserted to be positioned within the opening 51 a and a projection 24c formed at the pressure plate 24 is inserted to be positioned within the opening 52a. Edge portions of the projection 23d and edge portions of the opening 51a are caught or engaged with each other in the circumferential direction. In addition, edge portions of the projection 24c and edge portions of the opening 52a are caught or engaged with each other in the circumferential direction. Thus, the friction members 51 and 52 integrally rotate with the support plate 23 and the pressure plate 24, i.e., the second rotation member 2, around the rotation center Ax. Each of the friction members 51 and 52 may be formed of a synthetic resin material including a glass fiber material or a synthetic rubber, for example, or the like. As illustrated in Fig. 3, each of the friction members 51 and 52 is arranged so that at least a portion thereof overlaps the elastic member 6 in a direction orthogonal to the rotation center Ax, i.e., in the radial direction.

As illustrated in the upper right portion of Fig. 3, the elastic member 53 constituting a portion of the limiter portion 102 is positioned between the second connection portion 22a and the sixth connection portion 24a to apply the elastic force thereto in a direction where the second connection portion 22a and the sixth connection portion 24a are away from each other in the axial direction. The elastic member 53 overlaps a sliding surface of each of the friction members 51 and 52 in the axial direction. The elastic member 53 presses the sixth connection portion 24a against the fifth connection portion 23b in a state where the friction member 52, the third wall portion 33a of the lining plate 33 and the friction member 51 are sandwiched between the sixth connection portion 24a and the fifth connection portion 23b. That is, a friction force is generated between each of the friction members 51, 52 and the third wall portion 33a of the lining plate 33 by a load caused by the elastic force of the elastic member 53. In the present embodiment, until a torque difference that exceeds a maximum holding friction force as the aforementioned friction force is achieved, the third rotation member 3 and the second rotation member 2 are inhibited from slipping each other. The elastic member 53 may be a cone spring formed by a metallic material, for example.

The slippage is inhibited from occurring at the limiter portion 102 because of an elastic pressing force of the elastic member 53 in a case where a value of a torque difference between the damper portion 101 including the first rotation member 1 and the third rotation member 3 and the second rotation member 2 as the limiter portion 102 at the opposite side from the damper portion 101 (i.e., the output side of the damper apparatus 100) is smaller than a threshold value within a predetermined range (i.e., a predetermined value). The damper portion 101 and the limiter potion 102 thus rotate integrally, i.e., the damper apparatus 100 including the damper portion 101 and the limiter potion 102 rotate integrally. On the other hand, in a state where the value of the torque difference between the damper portion 101 and the opposite side of the limiter portion 102 from the damper portion 101 is greater than the threshold value, the slippage that exceeds the friction force resulting from the elastic pressing force of the elastic member 53 is generated at the limiter portion 102. The limiter portion 102 functions as a torque limiter to restrain an excessive torque transmission exceeding the predetermined value.

In the present embodiment, the lining plate 33 serving as a portion of the limiter portion 102 is configured as a portion of the third rotation member 3. Then, as illustrated in Figs. 2 and 3, a diameter of the third rotation member 3 including the lining plate 33 is specified to be smaller than a diameter of the second rotation member 2 serving as a portion of the limiter portion 102. Thus, in the present embodiment, for example, a size of the third rotation member 3 in the radial direction and further an inertia torque thereof may be reduced, for example. In a case where a torque of the second rotation member 2 becomes greater than a torque of the third rotation member 3 and thus the limiter portion 102 is operated, a torque input to the first rotation member 1 serving as the low torque side from the third rotation member 3 may be reduced.

As mentioned above, in the present embodiment, for example, the damper apparatus 100 includes the third rotation member 3 disposed between the first rotation member 1 and the second rotation member 2 and the limiter portion 102 causing the third rotation member 3 and the second rotation member 2 to relatively rotate each other in a case where the torque difference between the third rotation member 3 and the second rotation member 2 reaches or exceeds the predetermined value. The diameter of the third rotation member 3 is specified to be smaller than the second rotation member 2. Thus, the size and further the inertia torque of the third rotation member 3 may be reduced. The torque input to the first rotation member 1 (i.e., low torque side) from the third rotation member 3 may be reduced.

In addition, in the present embodiment, for example, at least the portion of the friction member 51 and the elastic member 6 are arranged to overlap in the direction orthogonal to the rotation axis Ax, i.e., in the radial direction. Provided the friction member 51 and the elastic member 6 are arranged without overlapping in the radial direction, the third wall portion 33a and the second wall portion 33c of the lining plate 33, for example, are necessarily disposed greatly away from the first wall portion 33d in the axial direction. The lining plate 33 and further the third rotation member 3 may be enlarged. In the present embodiment, however, because at least the portion of the friction member 51 and the elastic member 6 are arranged to overlap in the radial direction, the size and the inertia torque of the third rotation member 3 may be reduced. Accordingly, the torque input to the first rotation member 1 from the third rotation member 3 may be reduced.

Further, in the present embodiment, for example, the third rotation member 3 includes the first wall portion 33d positioned at the radially outer side of the elastic member 6, the second wall portion 33c protruding from the first wall portion 33d towards the radially outer side and the second side in the axial direction, i.e., protruding to the opposite side from the first rotation member 1 in the axial direction and the third wall portion 33a protruding from the second wall portion 33c towards the radially outer side to overlap the friction member 51 in the axial direction. Provided the first wall portion 33d and the third wall portion 33a overlap in the radial direction to configure the lining plate 33 in a flat form, for example, a space for accommodating or arranging the friction member 51 and the support plate 23 of the second rotation member 2 between the third wall portion 33a and the second projecting portion 11 d of the first rotation member 1 is unlikely to be secured. As a result, the friction member 51, the support plate 23 and the third wall portion 33a of the third rotation member 3 overlapping the friction member 51 and the support plate 23 in the axial direction may need to be arranged at the further radially outer side. In the present embodiment, however, because the friction member 51 and the support plate 23 of the second rotation member 2 are disposed between the third wall portion 33a and the second projecting portion 11 d, the friction member 51, the support plate 23 and the third wall portion 33a overlapping the friction member 51 and the support plate 23 in the axial direction are arranged at a further radially inner side as compared to a case where the lining plate 33 is formed in a flat plate form, which may reduce the size and inertia torque of the third rotation member 3.

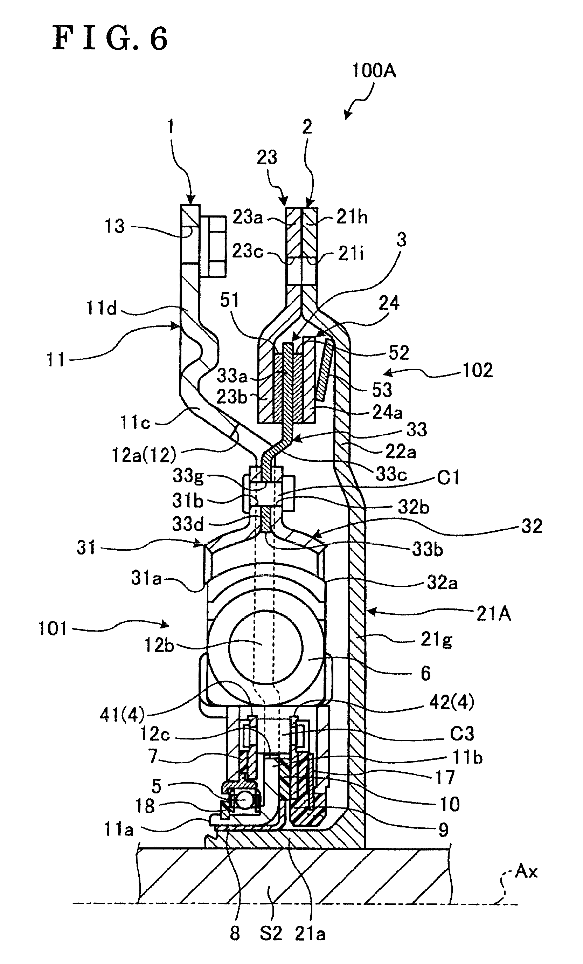

A second embodiment is explained with reference to Fig. 6. A damper apparatus 100A according to the second embodiment illustrated in Fig. 6 includes the similar construction to the damper apparatus 100 according to the aforementioned first embodiment. Thus, in the second embodiment, the similar effects and the like resulting from the similar construction to the first embodiment are obtainable.

In the second embodiment, as illustrated in a right portion of Fig. 6, a hub member 21A of the second rotation member 2 includes the cylindrical portion 21 a in a cylindrical form and a third protruding portion 21 g serving as a wall portion integrally formed with the cylindrical portion 21 a. The third protruding portion 21 g includes an end portion 21h at the radially outer side, the end portion 21 h being positioned at the radially outer side than the third rotation member 3. That is, the hub member 21A in the second embodiment is obtained by a construction where the hub member 21 and the cover 22 in the first embodiment are integrally formed. The cylindrical portion 21 a is provided to cover the input shaft S2 of the transmission, i.e., a periphery of the rotation center Ax. The third protruding portion 21 g protrudes from the second side in the axial direction of the cylindrical portion 21 a, i.e., from an end portion at the right side in Fig. 6 of the cylindrical portion 21 a, towards the radially outer side to configure an annular and plate form expanding in the radial direction. The end portion 21h of the third protruding portion 21 g axially overlaps the fourth connection portion 23a of the support plate 23 at the radially outer side of the lining plate 33. An opening 21 i is formed at the end portion 21 h of the third protruding portion 21 g so that a connecting member such as a rivet, for example, penetrates through the opening 21 i in addition to the opening 23c of the fourth connection portion 23a. In the second embodiment, the cylindrical portion 21 a is an example of a hub portion and the third protruding portion 21 g is an example of a first plate portion. In the second embodiment, as compared to a case where the cylindrical portion 21 a and the third protruding portion 21 g are formed by separate members from each other, a labor hour and a cost related to a manufacturing of the damper apparatus 100A may be reduced.

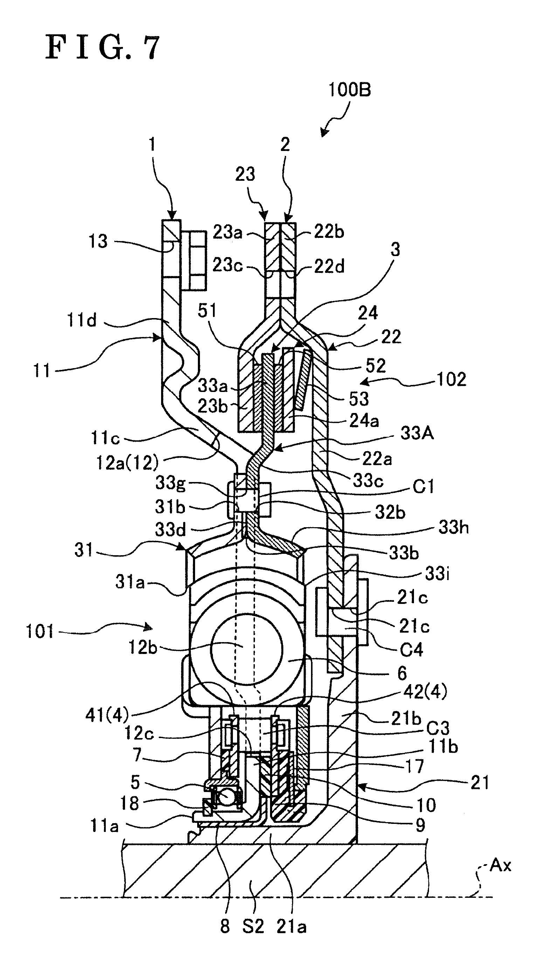

A third embodiment is explained with reference to Fig. 7. A damper apparatus 100B according to the third embodiment as illustrated in Fig. 7 includes the similar construction to the damper apparatus 100 according to the aforementioned first embodiment. Thus, in the third embodiment, the similar effects and the like resulting from the similar construction to the first embodiment are obtainable.

As illustrated in Fig. 7, in the third embodiment, a lining plate 33A of the third rotation member 3 includes the third wall portion 33a constituting a portion of the limiter portion 102 and a seventh connection portion 33h serving as a wall portion integrally formed with the third wall portion 33a and positioned at the axially opposite side from the side plate 31 relative to the elastic member 6. That is, the lining plate 33A in the third embodiment is obtained by a construction where the lining plate 33 and the side plate 32 in the first embodiment are integrally formed. At this time, alternatively, the lining plate 33A may be obtained by a construction where the lining plate 33 and the side plate 31 in the first embodiment are integrally formed. That is, the seventh connection portion 33h integrally formed with the third wall portion 33a may be positioned at the axially opposite side from the side plate 32 relative to the elastic member 6. The third wall portion 33a is configured in an annular and plate form expanding in the radial direction and is sandwiched between the friction members 51 and 52. The seventh connection portion 33h protrudes from a radially inner end portion of the protruding portion 33b towards the second side in the axial direction, i.e., to the right side in Fig. 7, and towards the radially inner side. The seventh connection portion 33h is configured in an annular and plate form expanding in the radial direction and is positioned away from the side plate 31 at the second side in the axial direction. An opening 33i is formed at the seventh connection portion 33h so as to overlap the opening portion 31a of the side plate 31 in the axial direction. The elastic member 6 is disposed between the first circumferential edge portion and the second circumferential edge portion of each of the opening portion 31a and the opening 33i. The lining plate 33A and the side plate 31 are connected to each other via the connecting member C1 such as a rivet, for example, as illustrated in Fig. 7. In the present embodiment, the seventh connection portion 33h is an example of a second plate portion and the third wall portion 33a is an example of a third plate portion. In the third embodiment, as compared to a case where the seventh connection portion 33h and the third wall portion 33a are formed by separate members from each other, for example, a labor hour and a cost related to a manufacturing of the damper apparatus 100B may be reduced.

The aforementioned embodiments are examples and therefore changes or modifications including omissions, replacements and combinations, for example, may be appropriately conducted. The aforementioned embodiments may be achieved by a construction other than the aforementioned construction and may obtain various effects (including secondary effects) by a base construction (technical feature). Specifications (configuration, type, direction, shape, size, length, width, thickness, height, quantity, layout, position, material and the like) of each component, for example, may be appropriately changed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A damper apparatus (100, 100A, 100B) comprising:
a first rotation member (1) rotatable around a rotation center (Ax);
a second rotation member (2) rotatable around the rotation center (Ax);
a third rotation member (3) arranged between the first rotation member (1) and the second rotation member (2) and being rotatable around the rotation center (Ax);
an elastic member (6) elastically expanding and contracting in association with a relative rotation between the first rotation member (1) and the third rotation member (3) around the rotation center (Ax); and
a limiter portion (102) including a friction member (51, 52) sandwiched between the third rotation member (3) and the second rotation member (2), the friction member (51, 52) being configured to slide relative to at least one of the third rotation member (3) and the second rotation member (2) to cause the third rotation member (3) and the second rotation member (2) to rotate relative to each other around the rotation center (Ax) in a case where a value of a torque difference between the third rotation member (3) and the second rotation member (2) is equal to or greater than a predetermined value, wherein
the third rotation member (3) includes a diameter smaller than a diameter of the second rotation member (2).

2. The damper apparatus (100, 100A, 100B) according to claim 1, wherein at least a portion of the friction member (51, 52) and the elastic member (6) overlap in a direction orthogonal to the rotation center (Ax).

3. The damper apparatus (100, 100A, 100B) according to either claim 1 or 2, wherein the third rotation member (3) includes:
a first wall portion (33d) positioned at a radially outer side than the elastic member (6);
a second wall portion (33c) protruding from the first wall portion (33d) towards the radially outer side and towards an opposite side from the first rotation member (1) in an axial direction of the rotation center (Ax); and
a third wall portion (33a) protruding from the second wall portion (33c) towards the radially outer side and overlapping the friction member (51, 52) in the axial direction.

4. The damper apparatus (100A) according to any one of claims 1 through 3, wherein the second rotation member (2) includes a hub portion (21 a) covering a periphery of the rotation center (Ax) and a first plate portion (21 g) positioned at the radially outer side of the rotation center (Ax) than the third rotation member (3), the hub portion (21a) and the first plate portion (21g) being integrally formed with each other.

5. The damper apparatus (100B) according to any one of claims 1 through 4, wherein the third rotation member (3) includes a pair of second plate portions (33h) positioned away from each other in an axial direction of the rotation center (Ax) and overlapping the elastic member (6) in a circumferential direction of the rotation center (Ax), and a third plate portion (33a) positioned overlapping the friction member (51, 52) in the axial direction, at least one of the pair of second plate portions (33h) and the third plate portion (33a) being integrally formed with each other.
